# EUROPEAN PATENT SPECIFICATION

(11) **EP 0 374 547 B1**
(45) Date of publication and mention of the grant of the patent: **06.03.1996**
(21) Application number: 89122216.8
(22) Date of filing: 01.12.1989
(51) Int. Cl.: G06F 5/06

(54) **System for controlling a variable source by the feedback of the running mode, and relevant circuit**
System zur Steuerung einer veränderlichen Quelle durch Rückkopplung der Arbeitsweise und dazu geeignete Schaltung
Système et circuit de commande d'une source variable par rétroaction du mode de travail

(30) Priority: 21.12.1988 IT 2303788
(43) Date of publication of application: 27.06.1990
(73) Proprietor: ALCATEL ITALIA Società per Azioni, I-20149 Milano (IT)
(72) Inventor: Ronchetti, Luigi, I-22100 Como (IT); Stroppiana, Mario, I-10137 Torino (IT)
(74) Representative: Strehl Schübel-Hopf Groening & Partner

(56) References cited:
- EP-A- 0 013 347
- EP-A- 0 247 317
- DE-A- 2 639 895
- US-A- 4 611 300
- US-A- 4 694 426
- IBM TECHNICAL DISCLOSURE BULLETIN. vol. 27, no. 4B, September 1984, NEW YORK US pages 2730 - 2731; JOHNSON ET AL: 'DYNAMIC FIFO RAM MANAGER FOR A BUFFER INSERTION RING'

## Description

### Field of the Invention

The present invention relates to a method for controlling the variable data flow rate from a data source to a buffer which outputs data at a constant rate and to a circuit for implementing such a method.

### Description of the Related Art:

The invention can be included in the field of control systems which take data from a data source and transmit that data at constant bit rate (where bit rate is a measurement of the quantity of information transmitted during a time unit). To obtain a constant bit rate at the output when at the input there is a data source generating data at a variable rate, it is necessary to use a delay memory (buffer).

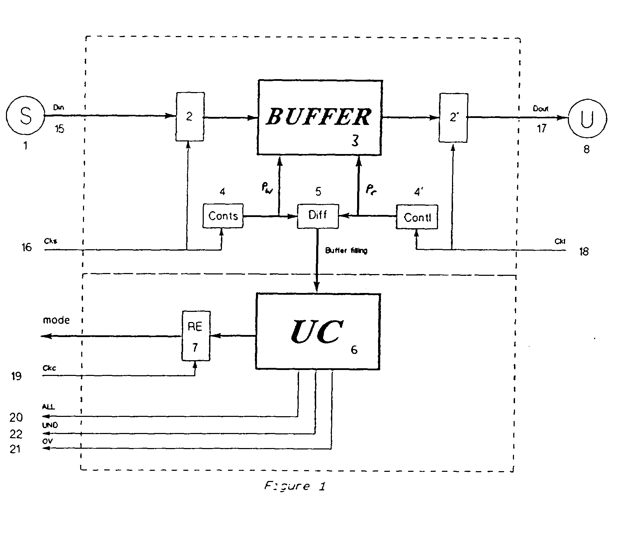

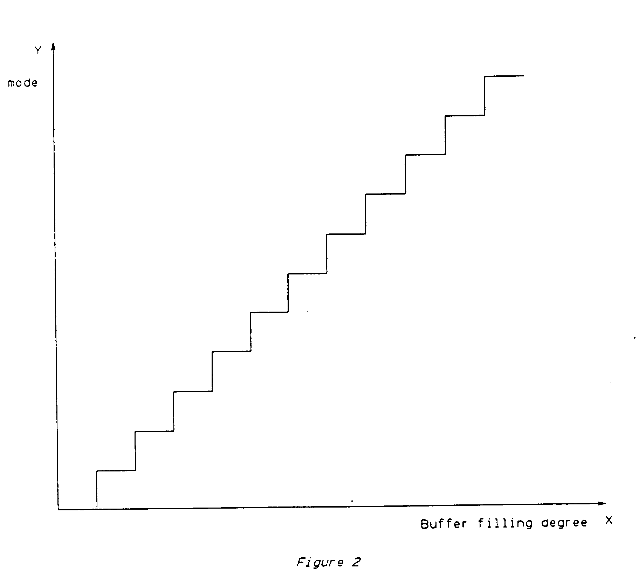

As is well-known, the buffer can be considered as a recurrent memory, in which the data are read (outputted) serially at constant frequency fr, but written (inputted) serially at variable frequency fw (t). To avoid information losses, it is absolutely necessary to ensure that the pointers Pr for reading (increasing uniformly versus time) and the pointers Pw for writing (increasing in a variable manner versus time) do not overtake each other while the system is running, but instead maintain a suitable distance from one another. The difference between the writing pointer and the reading pointer represents the filling degree of the buffer (i.e. the buffer status). A typical prior art control system has a structure as shown in Figure 1. The data Din (15) coming from the variable source S(1) are written in the BUFFER (3) in the locations of pointer Pw generated by the written counter Conts (4) at a rate determined by clock Cks (16) which has a variable frequency; similarly, the output data Dout (17) are read from the BUFFER (3) in the locations of pointer Pr generated by the reading counter Contl (4') at a rate determined by clock Ckl (18) which has a constant frequency. The degree of the buffer filling is determined by the difference between the pointers Pw and Pr calculated by the unit Diff (5). The generation frequency of the source S can be controlled by changing to a new running mode with control frequency established by the clock Ckc (19). The lower the operating mode, the greater the information quantity generated by the source (i.e. the higher the data rate) and the better the quality of the transmitted data and vice versa. Generally, alarm signals ALL (20) (overlapping or overtaking of the pointers), overflow control signals OV (21) (filling about to exceed the buffer dimensions) and underflow control signals UND (22) (filling approaching zero) are also generated to manage anomalous operating situations. Various buffer control strategies are well-known. Some strategies, see for example EP A1 0,013,347 or DE A1 2,639,895, tend to keep the buffer filling constant whenever possible (typically equal to half the buffer dimension); other strategies include: tending to obtain a mean bit rate at the output, applying operating modes proportional to the buffer filling degree, using constant memory sectors for each operating mode (an example is shown in Figure 2), or establishing in all cases a fixed relation between the buffer status (or filling degree) (abscissa) and operating mode (ordinate).

EP A2 0,247,317 discloses a strategy based on past history performance by controlling the data transfer threshold in accordance with the length of previously transferred data blocks.

The main drawbacks of the well-known techniques are mainly the limited capacity of mediation (cooperation) between source and output due to the assignment of limited buffer areas to each operating mode. This causes the transmitted data quality to be excessively variable versus time, since it is closely connected to the activity of the source, thereby leading to a deterioration of the system performance.

It is true that it is possible to reduce these disadvantages by increasing the buffer dimensions, but it is also true that, among other things, the system costs and the round trip delay (delay between data generation and its use) are increased.

### Summary of the Invention:

The first object of the present invention is to provide a method that overcomes the above-mentioned drawbacks and to provide a simple, compact, flexible circuit with low implementation and operating costs, which implements such a method.

This object is met by a method according to claim 1 and a circuit according to claim 4. Preferred embodiments are defined in the depending claims. According to the invention, the control is effected by a mode signal which depends, not only on the storing of the data itself into the buffer, but also on the mode signal used in the preceding instant, as well as on additional external control signals, whereby the variable input data flow is adapted to the output data flow, with a resulting performance which remains very constant over time.

According to the invention, the operating mode signal is no longer generated from a relationship substantially based upon the buffer filling degree, but from relations which depend upon the past history of the buffer filling.

In a preferred embodiment of the invention, the mode is obtained dynamically from the "hysteresis" curve of the filling degree.

In another embodiment of the invention, the control unit which generates the operating mode for the variable source at a certain instant, is controlled at any instant, not only by the buffer filling degree, but also by external control signals, and by the operating mode used in a preceding instant.

The circuit to implement the above mentioned method includes, as in prior art systems, a variable data source S (1), a BUFFER (3), and a control unit UC' (9) controlled by the buffer and operating on the variable data source by means of a register RE (7), wherein the control unit UC' (9) also incorporates an additional element ED (10) which is controlled by the output signal of register RE (7). This output signal controls the mode at a fixed instant (to) but is also fed back to the control unit (UC'), while the control unit is generating the mode at the following instant (t1).

The features and advantages of the present invention will be better understood from the following description of a preferred but not limiting embodiment thereof represented in the drawings.

### Brief Description of the Drawings:

- Fig. 1: shows a typical prior art control system;
- Fig. 2: shows the relationship between the degree of buffer filling and the operating mode in a prior art control system;
- Fig. 3: shows a preferred control system of the present invention; and
- Fig. 4-6: represent several possible relationships between the buffer filling and the operating mode in system according to the present invention.

### Detailed Description of the Preferred Embodiments:

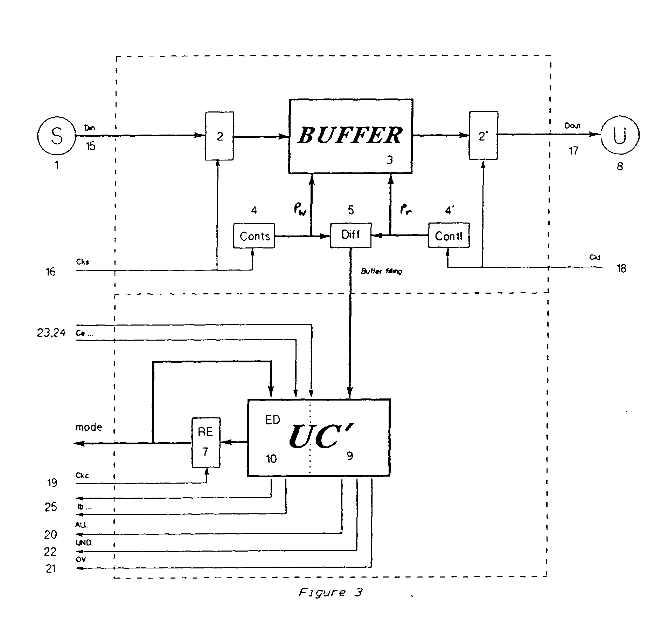

Figure 3 shows the new type of buffer control in accordance with the present invention. The operating mode is established by dynamically assigning a great percentage of the (spare) buffer to the "actual" operating mode.

According to a primary feature of the invention, the control unit UC' now includes an additional portion or element ED (10) which is controlled by the mode signal obtained from the register RE (7) at the present instant (to) and applied to UC' while the latter is generating the mode at the next instant (t1)

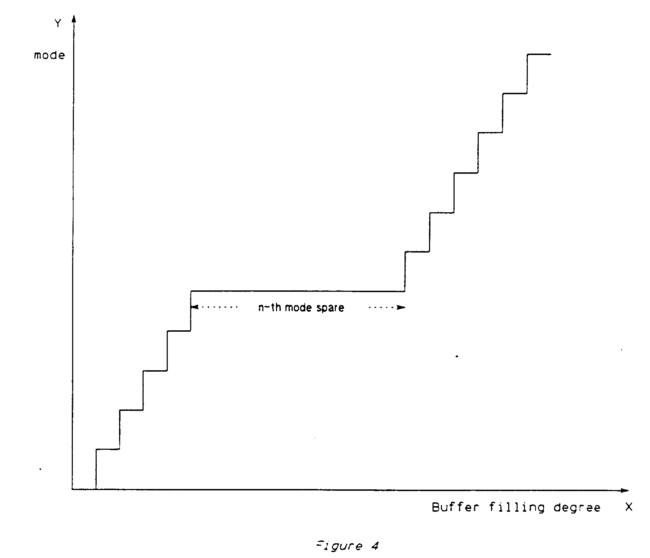

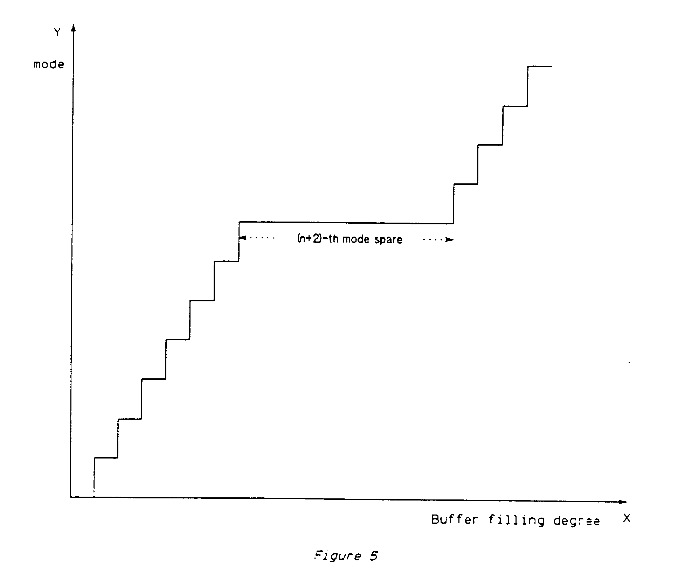

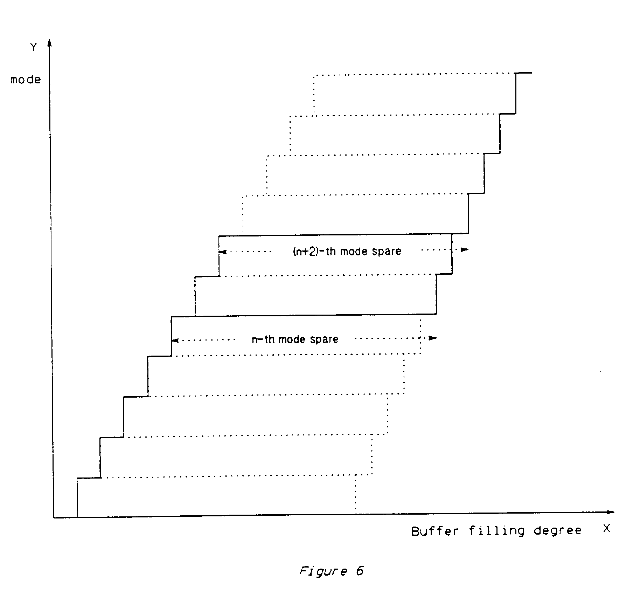

Figures 4, 5 and 6 represent possible relationships between the buffer filling degree and the operating mode. These relations are obtained by having the "actual" mode retroacting on the control unit, getting in this manner a kind of hysteresis". There is no longer a set relation between the mode and the buffer status, but instead a new dynamic relation is obtained based on the knowledge of the "past" condition.

Further, the invention is adapted to receive external control signals Ce (23, 24) that can change the selection parameters of the mode, for example, as a function of the statistical source characteristics (it is possible, e.g. to assign different dimensions to the "spare" areas for each mode).

Further, the control unit outputs signals Ib (25) to the source to provide, for example, information related to the buffer status which cannot be obtained directly from the mode information.

The advantages obtained with this new type of buffer control are that the same operating mode can be maintained over a longer time as compared to well-known methods, resulting in an increase of the quality of transmitted data due to the constancy of performance.

## Claims

1. A method for controlling the variable data flow rate (Din) from a data source (1) to a buffer (3), which buffer outputs data (Dout) at a constant rate, wherein,
depending upon the degree to which said buffer is filled with data, an operating mode signal (mode), generated by the control unit (9), is transmitted to said data source to control the variable data flow rate, and
**characterised** in that an operating mode signal generated for a next instant (t1) depends upon the operating mode signal used to control the variable data flow rate in the present instant (t0) in order to reduce the number of changes in the variable data flow rate.

2. The method according to claim 1, wherein the generated operating mode signal (mode) further depends on control signals (23,24) supplied from a source external to the buffer (3) and its associated control unit (9).

3. The method according to claim 1 or 2, wherein a signal (25) is outputted representing the degree to which said buffer (3) is filled.

4. A circuit for controlling the variable data flow rate (Din) from a data source (1) to a buffer (3), which buffer outputs the data (Dout) at a constant rate, said circuit comprising a control unit (9) connected to said buffer for receiving a signal (buffer filling) indicating the degree to which said buffer (3) is filled with data and for transmitting an operating mode signal (mode) generated on the basis of said received signal to said data source to control the variable data flow rate,
**characterised** in that the operating mode signal used in the present instant (t0) to control the variable data flow rate is fed back to said control unit (9), wherein said operating mode signal feed-back influences the generation of an operating mode signal for the next instant (t1) in order to reduce the number of changes of the variable data flow rate.

5. The circuit according to claim 4, wherein said control unit (9) further receives control signals (23,24) from a source external to the buffer (3) and its associated control unit (9) in order influence the generation of the operating mode signals.

## Patentansprüche

1. Verfahren zum Steuern der variablen Datenflußrate (Dᵢₙ) von einer Datenquelle (1) zu einem Puffer (3), der Daten (Dₒᵤₜ) bei einer konstanten Rate ausgibt, wobei
abhängig vom Grad, bis zu dem der Puffer mit Daten gefüllt ist, ein durch eine Kontrolleinheit (9) erzeugtes Betriebsartsignal (mode) zur Datenquelle übertragen wird, um die variable Datenflußrate zu steuern, und
dadurch gekennzeichnet ist, daß ein für einen nächsten Zeitpunkt (t1) erzeugtes Betriebsartsignal von dem zum Steuern der variablen Datenflußrate im augenblicklichen Zeitpunkt (t0) verwendeten Betriebsartsignal abhängt, um die Anzahl der Änderungen in der variablen Datenflußrate zu verringern.

2. Verfahren gemäß Anspruch 1, wobei das erzeugte Betriebsartsignal (mode) weiter von Kontrollsignalen (23, 24) abhängt, die von einer Quelle geliefert werden, die außerhalb des Puffers (3) und seiner dazugehörigen Kontrolleinheit (9) liegen.

3. Verfahren gemäß Anspruch 1 oder 2, wobei ein Signal (25) ausgegeben wird, das den Grad, bis zu dem der Puffer (3) gefüllt ist, darstellt.

4. Schaltung zum Steuern der variablen Datenflußrate (Dᵢₙ) aus einer Datenquelle (1) zu einem Puffer (3), der Daten (Dₒᵤₜ) bei einer konstanten Rate ausgibt, wobei die Schaltung eine mit dem Puffer verbundene Kontrolleinheit (9) zum Empfangen eines Signals (Pufferfüllung), das den Grad anzeigt, bis zu dem der Puffer (3) mit Daten gefüllt ist, und zum Übertragen eines Betriebsartsignals (mode), das auf der Grundlage des von der Datenquelle empfangenen Signals erzeugt wird, um die variable Datenflußrate zu steuern,
dadurch gekennzeichnet, daß das Betriebsartsignal, das zum gegenwärtigen Zeitpunkt (t0) zum Steuern der variablen Datenflußrate verwendet wird, zu der Kontrolleinheit (9) rückgekoppelt wird, wobei die Betriebsart-Signal-Rückkopplung die Erzeugung eines Betriebsartsignals für den nächsten Zeitpunkt (t1) beeinflußt, um die Anzahl der Änderungen der variablen Datenflußrate zu verringern.

5. Schaltung gemäß Anspruch 4, wobei die Kontrolleinheit (9) weiter Kontrollsignale (23, 24) von einer Quelle empfängt, die außerhalb des Puffers (3) und seiner dazugehörigen Kontrolleinheit (9) liegt, um die Erzeugung der Betriebsartsignale zu beeinflussen.

## Revendications

1. Procédé pour contrôler le débit de données variable (Din) d'une source de données (1) à un tampon (3), lequel tampon délivre des données (Dout) à un débit constant, dans lequel en fonction du degré de remplissage dudit tampon avec des données, un signal de mode de fonctionnement (mode), produit par une unité de contrôle (9), est envoyé à ladite source de données pour contrôler le débit de données variable, et
caractérisé en ce qu'un signal de mode de fonctionnement produit à un instant suivant (t1) dépend du signal de mode de fonctionnement utilisé pour contrôler le débit de données variable à l'instant présent (t0) pour réduire le nombre de modifications dans le débit de données variable.

2. Procédé selon la revendication 1, dans lequel le signal de mode de fonctionnement produit (mode) dépend en outre de signaux de contrôle (23,24) envoyés par une source extérieure au tampon (3) et à son unité de contrôle associée (9).

3. Procédé selon la revendication 1 ou 2, dans lequel un signal (25) représentant le degré de remplissage dudit tampon (3) est délivré.

4. Circuit pour contrôler le débit de données variable (Din) transféré d'une source de données (1) à un tampon (3), lequel tampon délivre des données (Dout) à un débit constant, ledit circuit comprenant une unité de contrôle (9) connectée audit tampon pour recevoir un signal (remplissage de tampon) indiquant le degré de remplissage dudit tampon (3) par des données, et pour transmettre un signal de mode de fonctionnement (mode) produit sur la base dudit signal reçu à ladite source de données pour contrôler le débit de données variable,
caractérisé en ce que le mode de fonctionnement utilisé à l'instant présent (t0) pour contrôler le débit de données variable est renvoyé à ladite unité de contrôle (9), ledit renvoi du signal de mode de fonctionnement influençant la production d'un signal de mode de fonctionnement pour l'instant suivant (t1) pour réduire le nombre de modifications du débit de données variable.

5. Circuit selon la revendication 4, dans lequel ladite unité de contrôle (9) reçoit en outre des signaux de contrôle (23,24) envoyés d'une source extérieure au tampon (3) et à son unité de contrôle associée (9) pour influencer la production des signaux de mode de fonctionnement.
